# EUROPEAN PATENT SPECIFICATION

(11) **EP 4 198 178 B1**
(45) Date of publication and mention of the grant of the patent: **21.08.2024**
(21) Application number: 22209760.2
(22) Date of filing: 26.11.2022
(51) Int. Cl.: D01D 5/00, D04H 1/728

(54) **A METHOD OF PRODUCING A SHRINKABLE STARCH MEMBRANE AND USE OF THE SHRINKABLE STARCH MEMBRANE IN THE FOOD INDUSTRY AS PACKAGING**
VERFAHREN ZUR HERSTELLUNG EINER SCHRUMPFBAREN STÄRKEMEMBRAN UND VERWENDUNG DER SCHRUMPFBAREN STÄRKEMEMBRAN IN DER LEBENSMITTELINDUSTRIE ALS VERPACKUNG
PROCÉDÉ DE FABRICATION D'UNE MEMBRANE RÉTRÉCISSABLE À BASE D'AMIDON ET UTILISATION DE LA MEMBRANE RÉTRÉCISSABLE À BASE D'AMIDON DANS L'INDUSTRIE ALIMENTAIRE COMME EMBALLAGE

(30) Priority: 30.11.2021 PL 43968221
(43) Date of publication of application: 21.06.2023
(73) Proprietor: Akademia Gorniczo-Hutnicza im. Stanislawa Staszica w Krakowie, 30-059 Krakow (PL)
(72) Inventor: STACHEWICZ, Urszula, 30-091 Kraków (PL); SROCZYK, Ewa, 38-300 Gorlice (PL)
(74) Representative: Augustyniak, Magdalena Anna

(56) References cited:
- WO-A1-2013/130586
- CN-A- 106 436 021
- CN-A- 113 005 641
- CN-A- 113 005 771
- CN-A- 113 026 210
- US-A1- 2018 044 818
- ASHRAF ROQIA ET AL: "Recent Trends in the Fabrication of Starch Nanofibers: Electrospinning and Non-electrospinning Routes and Their Applications in Biotechnology", APPLIED BIOCHEMISTRY AND BIOTECHNOLOGY, HUMANA PRESS INC, NEW YORK, vol. 187, no. 1, 8 June 2018 (2018-06-08), pages 47 - 74, XP036672112, ISSN: 0273-2289, [retrieved on 20180608], DOI: 10.1007/S12010-018-2797-0
- FONSECA LAURA MARTINS ET AL: "Electrospinning of native and anionic corn starch fibers with different amylose contents", FOOD RESEARCH INTERNATIONAL, ELSEVIER, AMSTERDAM, NL, vol. 116, 11 October 2018 (2018-10-11), pages 1318 - 1326, XP085593771, ISSN: 0963-9969, DOI: 10.1016/J.FOODRES.2018.10.021
- ANICA LANCU?KI ET AL: "Rheological Properties and Electrospinnability of High-Amylose Starch in Formic Acid", BIOMACROMOLECULES, vol. 16, no. 8, 1 January 2015 (2015-01-01), US, pages 2529 - 2536, XP055477426, ISSN: 1525-7797, DOI: 10.1021/acs.biomac.5b00817

## Description

The subject matter of the invention relates to a method of producing a shrinkable starch membrane with high porosity. The subject matter of the invention also relates to the use of the shrinkable starch membrane in the food industry as packaging, especially having direct contact with food.

Starch is one of the most widespread biopolymers found in nature. It is classified as a polysaccharide of plant origin and consists of glucose mers linked by α-glycosidic bonds and acts as an energy store in plants. It is used primarily as a thickening agent in the food industry. It is also used in the pharmaceutical, cosmetic and paper industries. Starch is a biodegradable polymer. When added to other polymers, it makes plastics with an addition of starch biodegradable in a very short time. Starch can be modified by physical, chemical or biochemical processes to improve its performance properties.

A biodegradable nonwoven starch-containing fabric for sanitary and food packaging materials with a controlled rate of biodegradation is known from patent description KR100824719 B1. The nonwoven fabric was produced in the process of electrospinning from a solution prepared by dissolving starch, polyvinyl alcohol and a crosslinking agent in the form of boronic acid in water.

The electrospinning method involves pulling out fibres in an electric field from a polymer solution. The solution is pushed out through a nozzle, with the flow of solution controlled by an infusion pump. A high voltage is applied to the nozzle. The potential difference between the spinning nozzle and the collector results in the solution being drawn into very thin fibres, which are collected in the form of a membrane on the collector.

A nonwoven fabric produced by the electrospinning method from 60-80 parts by weight of corn starch and 20-40 parts by weight of guar gum is known from patent application CN106436021 A. First, the ingredients were prepared. Distilled water was added to the corn starch, everything was mixed and heated at a stirring speed of 200 rpm to obtain a starch sol. Then, guar gum was added to the distilled water, the suspension was mixed and the precipitated protein impurities were centrifuged. The prepared ingredients were mixed, and the resulting solution was subjected to electrospinning. A nonwoven fabric was obtained, which can be used in the packaging for the storage of food to ensure its freshness and, additionally, it can serve as a carrier and transfer system for functional ingredients, such as a natural antimicrobial agent and antioxidant.

There is known from a publication by W. Cárdenas et al, titled: "Preparation of potato starch microfibers obtained by electro wet spinning," IOP Conf. Ser. Mater. Sci. Eng. 138: 12001, DOI: 10.1088/1757-899X/138/1/012001 a method of producing porous membranes from potato starch by the method of electrospinning into a coagulation solution. A solution of starch in dimethylsulfoxide was prepared, and the coagulation solution was an aqueous 70% ethanol solution. The coagulation solution was designed to solidify the fibres. Electrospinning into the coagulation solution was carried out using different sets of parameters (voltage, flow rate, distance between the needle and the collector). All the processes resulted in the production of connected, fused fibres with a heterogeneous morphology and diameter, and even with a lack of fibre continuity. Contact of the starch solution stream with the ethanol solution at the moment of deposition on the collector did not result in complete solidification, which was the cause of the connections between the fibres.

A method of producing a composition of starch fibres or particles in the electrospinning or electrospraying (electrospray) process into a coagulation solution is known from the publication of international application WO2013130586 A1. The composition is intended for use in drug delivery, filtration or electronics. The method comprises producing a starch solution of 1 - 40% by weight, heating it to a temperature higher than the melting point or dissolution temperature of the starch in the solvent, and then electrospinning it into the coagulation solution in order to produce a composition of starch fibres or particles. The final step is washing the composition in order to remove the solvent. Preferably, the starch is dissolved in a solvent such as: DMSO, an aqueous solution of DMSO, an aqueous solution of N-methylmorpholine N-oxide (NMMO), N, N-dimethylacetamide with 3% LiCl, dimethylformamide (DMF) and an aqueous solution of DMF. The coagulation solution is preferably in the form of e.g. methanol, ethanol, 1-propanol, isopropyl alcohol, butyl alcohol, amyl alcohol, pentanol, hexanol, heptanol or a mixture thereof. The method also comprises the addition of fillers such as, for example, drugs, pharmaceutical compositions, flavouring agents, dyes, agricultural agents, pesticides, catalysts, fluorescent dyes or combinations thereof to the coagulation solution.

A fibrous membrane for tissue regeneration, produced by the electrospinning method, formed by interweaving fibres with diameters of 10 nm-100 µm, which has a porous structure is known from patent description EP2921136 B1. The fibres can be made of biodegradable materials, non-biodegradable materials or combinations thereof, such as polylactic acid, polycaprolactone, polyglycolic acid, polyurethane, polymethyl methacrylate, polyvinyl alcohol, starch, cellulose, alginate, among others. The method comprises the following steps: dissolving a polymer in a solvent to obtain a homogeneous solution, placing the solution in a syringe and carrying out electrospinning to obtain a fibrous membrane, then subjecting it to stretching and optionally freezing and subjecting it to vacuum lyophilisation. Electrospinning is carried out at a potential difference between the needle and the collector of 5-45 kV, a distance between the needle and the collector of 5-30 cm, and a polymer solution flow rate of 0.1-15.0 ml/h. US 2018 /044818 discloses a method of making a starch-formate fiber, the method comprising the steps of: providing a first spinning dope comprising a solution or dispersion of starch in a solvent comprising at least 50% vol. formic acid, where the starch is present at a concentration above the critical entanglement concentration where starch fibers are to be produced; electrospinning the spinning dope to produce a starch-formate fiber.

Unexpectedly, it has turned out that it is possible to produce a nonwoven fabric from starch that shrinks under the influence of water, which opens up completely new possibilities for its application.

The aim of the invention is to produce a shrinkable starch membrane by a simple, one-step and inexpensive method. The aim of the invention is also to use the shrinkable starch membrane in the food industry as packaging, especially having direct contact with food. The gist of the method of producing a shrinkable starch membrane by the electrospinning method, from a solution that is a mixture of starch and formic acid, is characterized in that a solution having a concentration of 18-22% by weight is prepared from corn starch and concentrated formic acid, the concentration of which is 98-99% by weight, and is mixed at a temperature of 20-25 °C at a speed of 100-200 rpm for 0.5 - 10.0 hours. Then, the homogeneous solution is allowed to rest for 15 - 30 hours, after which it is subjected to electrospinning in the conditions of 50-70% relative humidity, with a potential difference between the needle and the collector of 15-17 kV, a distance between the needle and the collector of 8-12 cm and a polymer solution flow rate of 0.50-0.70 ml/h, thus obtaining a membrane with a porosity of at least 60% and an average fibre diameter of 0.43 - 1.60 µm, which is stored at a temperature of 20-25 °C in a sealed container impermeable to humidity. The gist of the solution also relates to the use of the shrinkable starch membrane, produced by the method described in claim 1, in the food industry for packaging, in which the membrane is applied to the product and then wetted evenly with water having a temperature of 20 - 40 °C, in an amount of at least 6 µl/cm³.

The method according to the invention makes it possible to obtain membranes with unique properties, in a simple way. It is a one-step electrospinning process, for which an inexpensive, biodegradable natural polymer is used. Once made, the membrane requires no additional chemical or physical modifications. The concentration of starch and the choice of a solvent in the form of concentrated formic acid ensure that uniform fibres with diameters in the range of 0.43 - 1.60 µm are obtained. This is a key feature, since the diameter of the fibres directly determines the pore size of the membrane, which is important for food applications. The step of setting aside the polymer solution before electrospinning for 15-30 hours allows the optimum viscosity of the solution to be obtained, which is a factor that also affects the size of the fibres and pores of the membrane. On the other hand, the ambient humidity during the membrane production process, during electrospinning, the voltage value between the needle and the collector, and the polymer flow rate control the fibre morphology and its behaviour toward water.

The degree of shrinkage of the membrane produced by the method according to the invention, in an aqueous environment, depending on the temperature, reaches up to 90% relative to the initial surface. The membrane shrinks when exposed to moisture and then it maintains its shape permanently. The membrane can be used to protect food products as a shrinkable package, including those with complex shapes. The porosity of the electrospun starch membrane also allows it to be used for storing loose materials, such as groats, rice, flours, or other fine-grained products, since the grain sizes are much larger than the membrane's pores after shrinkage. Due to its porosity, products made of the membrane, such as food bags, enable gas exchange with the external environment; thus moisture from food products can be removed and does not cause food spoilage. Food products stored in packaging from electrospun membranes retain their freshness longer than if they were stored in sealed packaging.

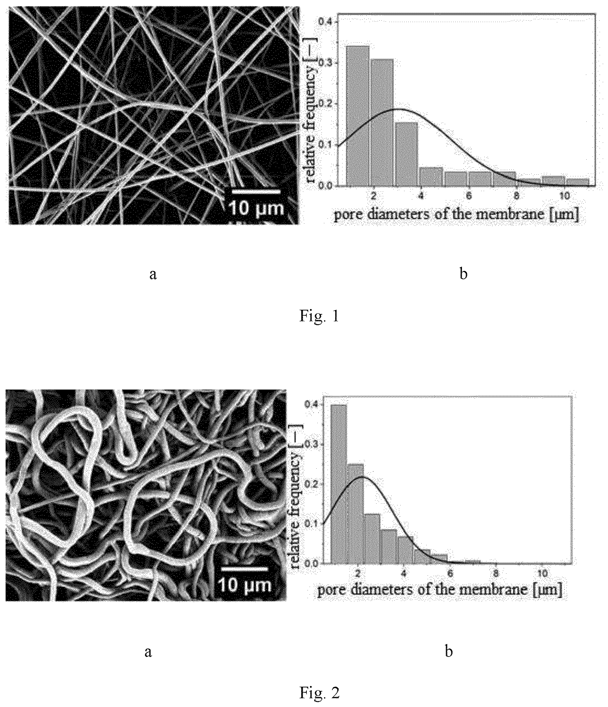

The method of producing the shrinkable starch membrane is explained in detail in the following examples and in the drawing, wherein Fig. 1a shows a microscopic photograph of a dry membrane produced by the method described in Example 1, Fig. 1b shows the distribution of pore diameters of this membrane, Fig. 2a shows a microscopic photograph of a starch membrane after shrinkage, and Fig. 2b shows the distribution of its pore diameters.

### Example 1

A 20% solution of corn starch in 99% formic acid was prepared. The ingredients were mixed on a magnetic stirrer at the temperature of 22 °C, at the speed of 200 rpm, until a homogeneous solution was obtained. Then, the solution was allowed to rest for 20 hours, after which time 2 ml of the solution was drawn into a syringe, and the syringe was plugged with a sterile needle. A tube was connected to the needle and a second needle was connected thereto so that the tubing ended with the blunt end of the needle. A potential difference of 16 kV was created between the needle and the collector by applying a positive voltage of +14 kV to the nozzle and a negative voltage of -2 kV to the collector. The needle was positioned at a distance of 10 cm from the collector. Electrospinning was carried out for 1.5 hours under 60% relative humidity conditions at 0.60 ml/h rate of flow of the solution through the syringe. A membrane having a thickness of 25.88 ± 2.62 µm, a porosity of 73.7 ± 7.9%, an average fibre diameter of 0.73 ± 0.21 µm and a pore diameter of 3.03 ± 2.19 µm was obtained, a microscopic photo of which, together with the pore diameter distribution, is presented in Fig.1a and Fig. 1b. The produced membrane was placed in a sealed container impermeable to humidity and was stored at room temperature of 25 °C.

### Example 2

The membrane produced by the method described in Example 1, after removing it from the packaging, was placed on a banana and was wetted evenly with water having the temperature of 30 °C, at an amount of 6 µl/cm³, thus obtaining 90% shrinkage of the membrane relative to its initial surface. The membrane provides additional protection for the fruit from bruising and keeps it fresh longer.

Fig. 2a and 2b show the membrane after shrinkage. Its porosity is 29.7 ± 2.9% and its pore diameter is 2.17 ± 1.33 µm.

### Example 3

The membrane produced by the method described in Example 1, after removing it from the packaging, was applied on a plastic cup design to store yogurt, kefir, or country cheese, and was wetted evenly with water and heated with a hair dryer to 40 °C. The membrane shrank, fitting tightly to the shape of the cup, and its shrinkage relative to its initial surface was 90%. The membrane provides protection for the food in the cup from insects.

## Claims

1. A method of producing a shrinkable starch membrane , by the electrospinning process, from a solution which is a mixture of starch and formic acid, **characterized in that** a solution having a concentration of 18-22% by weight is prepared from corn starch and concentrated formic acid, the concentration of which is 98-99% by weight, is mixed at a temperature of 20-25 °C at a speed of 100-200 rpm for 0.5-10.0 hours, then the homogeneous solution is allowed to rest for 15-30 hours, after which it is subjected to electrospinning in the conditions of 50-70% relative humidity, with a potential difference between the needle and the collector of 15-17 kV, a distance between the needle and the collector of 8-12 cm, and a polymer solution flow rate of 0.50-0.70 ml/h, thus obtaining a membrane with a porosity of at least 60% and an average fibre diameter of 0.43-1.60 µm, which is stored at a temperature of 20-25 °C in a sealed container impermeable to humidity.

2. Use of the shrinkable starch membrane produced by the method described in claim 1 in the food industry for packaging, in which the membrane is applied to the product and then wetted with water at 20 - 40 °C, in an amount of at least 6 µl/cm³.

## Patentansprüche

1. Verfahren zur Herstellung einer schrumpfbaren Stärkemembran durch das Elektrospinnverfahren aus einer Lösung, die eine Mischung aus Stärke und Ameisensäure ist, **dadurch gekennzeichnet, dass** eine Lösung mit einer Konzentration von 18-22 Gew.-% aus Maisstärke und konzentrierter Ameisensäure, deren Konzentration 98-99 Gew.-% beträgt, hergestellt wird, die Lösung bei einer Temperatur von 20-25°C und einer Geschwindigkeit von 100-200 U/min 0,5-10,0 Stunden lang gemischt wird, dann man die homogene Lösung 15-30 Std. ruhen lässt, danach die Lösung einem Elektrospinnen bei einer relativen Luftfeuchtigkeit von 50-70% und einer Potentialdifferenz zwischen der Nadel und dem Kollektor von 15-17 kV unterzogen wird, wobei ein Abstand zwischen der Nadel und dem Kollektor von 8-12 cm und eine Polymerlösungsdurchflussrate von 0,50-0,70 mL/h betragen, wodurch eine Membran mit einer Porosität von mindestens 60% und einem durchschnittlichen Faserdurchmesser von 0,43-1,60 µm erhalten wird, die bei einer Temperatur von 20-25°C in einem verschlossenen, feuchtigkeitsundurchlässigen Behälter gelagert wird,

2. Verwendung der nach dem in Anspruch 1 beschriebenen Verfahren hergestellten schrumpfbaren Stärkemembran in der Lebensmittelindustrie zur Verpackung, wobei die Membran auf das Produkt aufgebracht wird und anschließend mit Wasser von 20-40°C in einer Menge von mindestens 6 µL/cm³ benetzt wird.

## Revendications

1. Procédé de production d'une membrane d'amidon rétractable, par le procédé d'électrofilage, à partir d'une solution qui est un mélange d'amidon et d'acide formique, **caractérisé en ce qu'**une solution dont la concentration est de 18 à 22% en poids est préparée à partir d'amidon de maïs et de l'acide formique concentrée, dont la concentration est de 98 à 99% en poids, la solution est mélangé pendant 0,5 à 10,0 heures à une température de 20 à 25°C à une vitesse de 100 à 200 tr/min, puis la solution homogène est laissée au repos pendant 15-30 heures, après quoi il est soumis à un électrofilage dans des conditions : de 50 à 70% d'humidité relative, une différence de potentiel entre l'aiguille et le collecteur de 15 à 17 kV, une distance entre l'aiguille et le collecteur de 8 à 12 cm, et un débit de solution de polymère de 0,50 à 0,70 mL/h, obtenant ainsi une membrane avec une porosité d'au moins 60% et un diamètre moyen de fibre de 0,43-1,60 µm, qui est conservé à une température de 20-25°C dans un récipient fermé et imperméable à l'humidité,

2. Utilisation de la membrane d'amidon rétractable produite par le procédé décrit dans la revendication 1 dans l'industrie alimentaire pour l'emballage, dans laquelle la membrane est appliquée sur le produit, puis est humidifiée avec de l'eau à 20-40°C, en quantité d'au moins 6 µL/cm³.
